# EUROPÄISCHE PATENTANMELDUNG

(11) **EP 4 840 656 A1**
(43) Veröffentlichungstag der Anmeldung: **18.11.2026**
(21) Anmeldenummer: 26177739.5
(22) Anmeldetag: 08.05.2026
(51) Int. Cl.: B60G 17/027

(54) **SYSTEM ZUM VERSTELLEN EINES FUSSPUNKTES**

(30) Priorität: 14.05.2025 DE 102025118656
(71) Anmelder: Vibracoustic SE, 69469 Weinheim (DE)
(72) Erfinder: ALTINOLUK, Ersan, 20359 Hamburg (DE); BULLING, Dieter, 30900 Wedemark (DE)
(74) Vertreter: Patentanwälte Olbricht Buchhold Keulertz

(57) **Zusammenfassung**

Erfindungsgemäß wird ein System 1 zum Verstellen eines Fußpunktes 100 eines Federelements 200 für ein Fahrzeug 300 vorgeschlagen, mit mindestens einer Fußpunktverstellvorrichtung 2 und mit einem Flüssigkeitssystem 3, die Fußpunktverstellvorrichtung 2 umfassend zumindest eine Kammer 20 zum Ändern des Fußpunktes 100 mittels einer Änderung eines Volumens 21 der Kammer 20, wobei die Kammer 20 eine Flüssigkeit aufweist, das Flüssigkeitssystem 3 umfassend einen Flüssigkeitsspeicher 30 für die Flüssigkeit, wobei zwischen dem Flüssigkeitssystem 3 und der Kammer 20 ein Ventil 4 angeordnet ist, welches in einem geöffneten Zustand das Flüssigkeitssystem 3 und die Kammer 20 fluidkommunizierend miteinander verbindet und in einer geschlossenen Stellung das Flüssigkeitssystem 3 und die Kammer 20 fluidisch trennt. Ebenso erfindungsgemäß wir die Verwendung eines Flüssigkeitssystems 3 eines batterieelektrischen Fahrzeugs 300 als Flüssigkeit zum Verstellen eines Fußpunktes 100 eines Federelements 200 des Fahrzeugs 300 mittels einer Fußpunktverstellvorrichtung 2 sowie ein Verfahren zur Niveauregulierung eines Fahrzeugs 300 vorgeschlagen.

## Beschreibung

Die Erfindung betrifft ein System zum Verstellen eines Fußpunktes gemäß Anspruch 1, die Verwendung einer Flüssigkeit eines Flüssigkeitssystems eines batterieelektrischen Elektrofahrzeugs als Flüssigkeit zum Verstellen eines Fußpunktes gemäß Anspruch 10 sowie ein Verfahren zur Niveauregulierung eines Fahrzeugs gemäß Anspruch 11.

In Fahrzeugen ist eine steuerbare Anpassung der Fahrzeughöhe oft erforderlich, um unter verschiedenen Beladungsbedingungen und/oder Fahrzuständen eine konstante und optimale Nivellierung zu gewährleisten.

Bisherige Systeme zur Niveauregulierung setzen häufig auf komplexe mechanische oder luftfederbasierte Lösungen, die nicht immer eine direkte Anpassung der Fahrzeughöhe ermöglichen und oft auch in ihrer Effizienz, Kostenstruktur und Designfreiheit eingeschränkt sind. Die Erfindung zielt darauf ab, eine kostengünstige und einfache Lösung zu bieten, bei der die Niveauregulierung durch die Veränderung der Fußpunkte der Fahrzeugaufhängung realisiert wird. Durch die präzise Anpassung dieser Fußpunkte kann das Fahrzeugniveau angepasst werden, um die Fahrzeughöhe an den gewünschten Zustand aktiv anzupassen.

Aufgabe der Erfindung ist es eine Anpassung des Fahrzeugniveaus einfach und kostengünstig bereitzustellen und wenig zusätzlichen Bauraum in Anspruch zu nehmen. Diese Aufgabe wird durch die Gegenstände der unabhängigen Ansprüche 1 und 10 gelöst.

Erfindungsgemäße Merkmale sind in Anspruch 1, 10 und 11 angegeben. Ausgestaltungen sind Gegenstand der Ansprüche 2 bis 9.

Erfindungsgemäß wird ein System zum Verstellen eines Fußpunktes eines Federelements für ein Fahrzeug vorgeschlagen, mit mindestens einer Fußpunktverstellvorrichtung und mit einem Flüssigkeitssystem, die Fußpunktverstellvorrichtung umfassend zumindest eine Kammer zum Ändern des Fußpunktes mittels einer Änderung eines Volumens der Kammer, wobei die Kammer eine Flüssigkeit aufweist, das Flüssigkeitssystem umfassend einen Flüssigkeitsspeicher für die Flüssigkeit, wobei zwischen dem Flüssigkeitssystem und der Kammer ein Ventil angeordnet ist, welches in einem geöffneten Zustand das Flüssigkeitssystem und die Kammer fluidkommunizierend miteinander verbindet und in einer geschlossenen Stellung das Flüssigkeitssystem und die Kammer fluidisch trennt.

So kann ein Fußpunkt eines Federelements eines Fahrzeuges durch die Volumenänderung der Kammer angepasst, also in der Höhe relativ zu einer Fahrbahn verändert werden. Somit kann das Fahrniveau beispielsweise beladungsunabhängig eingestellt werden. Weiter kann ein Fahrniveau auch situationsabhängig, beispielsweise zum Einsteigen oder zum Beladen, zur Anpassung des Luftwiderstands während der Fahrt oder zur Anpassung des Luftstroms am Unterboden des Fahrzeugs zur Batteriekühlung erhöht oder verringert werden. Besonders vorteilhaft ist die Verwendung eines Flüssigkeitssystems mit einem Flüssigkeitsspeicher und einer Flüssigkeit, welches dem Fahrzeug ohnehin innewohnt. Fahrzeuge können eine Vielzahl von Flüssigkeitssystemen aufweisen, die regelmäßig über eigene Flüssigkeitsspeicher und Flüssigkeiten verfügen, um beispielsweise durch Umwälzen einen Temperaturtransport zu bewirken oder hydraulisch eine Kraft oder eine Aktuation zu transportieren. Solche Flüssigkeitssysteme können erfindungsgemäß für die Fußpunktverstellung mitgenutzt werden, sodass das im Fahrzeug vorhandene Flüssigkeitssystem den Flüssigkeitsspeicher und/oder die Flüssigkeit für das System zur Fußpunktverstellung bereitstellt. Dies kann Bauraum, Bauteile, Gewicht und Fehlerquellen einsparen. Weiter vorteilhaft kann das System durch die Verbindung mittels Ventils auch einfach in bestehende Fahrzeugkonzepte eingerüstet werden können. Solche Fahrzeugkonzepte können beispielsweise batterieelektrische Fahrzeuge (BEVs), Fahrzeuge mit Verbrennungsmotor (Verbrenner) oder Kombinationen daraus (Hybridfahrzeuge) sein.

In einer vorteilhaften Ausgestaltung kann das Flüssigkeitssystem ein Kühlsystem sein.

Besonders vorteilhaft kann die Verwendung des Kühlsystems eines Fahrzeugs sein, da Kühlsysteme als Flüssigkeit in der Regel eine Kühlflüssigkeit enthalten, welche besonders günstig ist und über einen großen Temperaturbereich hinweg über niedrige und gleichzeitig geringe Viskositätseigenschaften verfügen kann, was ein schnelles, zuverlässiges Verstellen des Fußpunktes bewirken kann. Weiter ist Kühlflüssigkeit bewährt und bekannt, weshalb Kompatibilitätsprobleme in Bereichen von Dichtungen, Schlauchverbindungen oder sonstigen kritischen Stellen ebenso bekannt sind und damit durch kühlsystemübliche Materialwahl umgangen werden können. Weiter kann der Flüssigkeitsspeicher eines Kühlsystems leicht vergrößert werden, um mehr Kühlflüssigkeit zum Betrieb des Systems zur Fußpunktverstellung bereitzustellen. Auch ein kurzfristiges Verringern einer üblichen Menge Kühlflüssigkeit zum Verstellen des Fußpunktes kann möglich sein, da Toleranzen im Kühlsystem meist großzügig gestaltet sind.

In einer weiteren vorteilhaften Ausgestaltung kann das Kühlsystem ein Batteriekühlsystem sein.

Besonders Batteriekühlsysteme können durch ihren komplexen Aufbau mit Sensoren, Regelgliedern, Pumpen und Steuergeräten an Anforderungen von anderen Systemen wie einem System zur Fußpunktverstellung angepasst werden, beispielsweise durch eine Softwareanpassung. So kann das Batteriekühlsystem leicht mit dem System zur Fußpunktverstellung verbunden werden, um beispielsweise weitere Komponenten der beiden Systeme wechselseitig zu verwenden und mehr Bauteile, Bauraum und Gewicht sparen zu können. In batterieelektrischen Fahrzeugen (BEVs) oder in Hybridfahrzeugen, welche mindestens optional elektrisch angetrieben werden können, sind die Kühlsysteme der Batterie systemrelevant und können nicht entfallen.

In einer weiteren vorteilhaften Ausgestaltung kann das System, zum Ändern des Volumens der Kammer, eine Ein-/Ausbringvorrichtung aufweisen.

Eine Ein-/Ausbringvorrichtung kann beispielsweise eine Pumpe, eine Düse oder eine sonstige Vorrichtung sein, die eine Flüssigkeit in die Kammer ein- und/oder ausbringt sein. Dabei können das Einbringen und das Ausbringen durch eine Vorrichtung oder durch mehrere Vorrichtungen bewirkt werden.

In einer weiteren vorteilhaften Ausgestaltung kann die Ein-/Ausbringvorrichtung die Flüssigkeit aus dem Flüssigkeitssystem in die Kammer ein-/ausbringen.

Besonders einfach und kostengünstig kann so die Flüssigkeit des Flüssigkeitssystems zur Verstellung des Fußpunktes verwendet werden.

In einer weiteren vorteilhaften Ausgestaltung kann die Ein-/Ausbringvorrichtung an der Fußpunktverstellvorrichtung angeordnet sein.

So kann das System zur Fußpunktverstellung noch einfacher und kostengünstiger in ein Fahrzeug integriert werden, insbesondere bei einem Fahrzeugkonzept, welches als BEV, als Verbrenner oder als Hybrid ausgeführt wird. Ist die Ein-/Ausbringvorrichtung an der Fußpunktverstellvorrichtung des Systems zur Fußpunktverstellung angeordnet, kann sie beispielsweise ohne Anforderungen an das Flüssigkeitssystem in das Fahrzeug integriert werden, da lediglich die Flüssigkeit des Flüssigkeitssystems bereitgestellt werden muss.

In einer weiteren vorteilhaften Ausgestaltung kann die Ein-/Ausbringvorrichtung im Flüssigkeitssystem angeordnet sein.

Diese Ausgestaltung hat den Vorteil, dass eine ohnehin im Flüssigkeitssystem angeordnete Ein-/Ausbringvorrichtung, beispielsweise eine Pumpe, und somit ein weiteres Bauteil synergetisch genutzt werden kann und weiterer Bauraum, Bauteile, Gewicht und somit Kosten eingespart werden können.

In einer weiteren vorteilhaften Ausgestaltung kann die Kammer zumindest bereichsweise von mindestens einem Balg begrenzt sein.

Bälge haben sich als robust und gleichzeitig kostengünstig erwiesen und können, wenn sie zumindest bereichsweise die Kammer begrenzen, die Flüssigkeit als Volumen der Kammer aufnehmen und beispielsweise wegen ihrer elastischen Eigenschaften besonders vorteilhaft eine Verstellung des Fußpunktes bewirken. Weiter können Bälge in vielfältigen Formen gefertigt werden wodurch sie beispielsweise auch an vorhandene Fahrzeuge oder Federelemente angepasst oder besonders bauraumeffizient in einem Fahrzeug integriert werden können. Der Balg kann dabei die Kammer vollständig begrenzen oder teilweise begrenzen, also das Begrenzen der Kammer allein, im Wesentlichen allein oder im Zusammenwirken mit anderen Bauteilen bewirken. Der Balg kann ein Elastomerbalg sein, in welchen Verstärkungselemente, beispielsweise Fäden oder Gewebe, eingebettet sein können.

In einer weiteren vorteilhaften Ausgestaltung kann das System eine Steuereinheit aufweisen, wobei die Steuereinheit einen Zustandswechsel des Ventils zwischen dem geöffneten Zustand und dem geschlossenen Zustand bewirken kann und/oder wobei die Steuereinheit die Ein-/Ausbringvorrichtung steuern kann.

Eine Steuereinheit, wie beispielsweise ein Steuergerät, ein Mikrocontroller oder eine Sender/Empfängereinheit kann das Ventil und/oder die Ein-/Ausbringvorrichtung in Abhängigkeit von beispielsweise Fahrzeugdaten, Sensordaten oder auch manuellen Eingaben steuern und somit eine Änderung des Volumens der Kammer und damit eine Änderung des Fußpunktes des Federelements bewirken und somit das Fahrzeugniveau steuern oder regeln. Weiter können auf einer Steuereinheit Programme für bestimmte Ereignisse, besondere Daten oder Eingaben enthalten sein, die die Steuerung bzw. Regelung weiter beeinflussen.

Ein weiterer Aspekt der Erfindung betrifft die Verwendung einer Flüssigkeit eines Flüssigkeitssystems eines batterieelektrischen Elektrofahrzeugs (BEVs) als Flüssigkeit zum Verstellen eines Fußpunktes eines Federelements des Fahrzeugs mittels einer Fußpunktverstellvorrichtung, umfassend zumindest eine Kammer zum Ändern des Fußpunktes mittels einer Änderung eines Volumens der Kammer, wobei die Kammer zur Aufnahme der Flüssigkeit ausgebildet ist, wobei die Flüssigkeit aus dem Flüssigkeitssystem des batterieelektrischen Elektrofahrzeugs in die Kammer eingeleitet und aus der Kammer in das Flüssigkeitssystem zurückgeleitet wird.

Um Wiederholungen zu vermeiden, wird auf die Vorteile der dem System zugeordneten verwiesen. Diese Vorteile ergeben sich insbesondere auch bei der Verwendung einer Flüssigkeit eines Flüssigkeitssystems eines batterieelektrischen Fahrzeugs.

Ein weiterer Aspekt der Erfindung betrifft ein Verfahren zur Niveauregulierung eines batterieelektrischen Elektrofahrzeugs mit einem Flüssigkeitssystem und einer Fußpunktverstellvorrichtung,
mit den folgenden Schritten zum Erhöhen des Fahrzeugniveaus:
   a. Öffnen eines Ventils zwischen einer Kammer der Fußpunktverstellvorrichtung und dem Flüssigkeitssystem, bevorzugt einem Batteriekühlsystem eines BEVs;
   b. Einströmen der Flüssigkeit in die Kammer;
   c. Schließen des Ventils zwischen der Kammer der Fußpunktverstellvorrichtung und dem Flüssigkeitssystem;
und mit den folgenden Schritten zum Absenken des Fahrzeugniveaus:
   d. Öffnen eines Ventils zwischen einer Kammer der Fußpunktverstellvorrichtung und dem Flüssigkeitssystem;
   e. Ausströmen der Flüssigkeit in die Kammer;
   f. Schließen des Ventils zwischen der Kammer der Fußpunktverstellvorrichtung und dem Flüssigkeitssystem;
wobei die Schritte zum Absenken und Erhöhen des Fahrzeugniveaus durch eine Steuereinheit in Abhängigkeit von Sensordaten und/oder Eingabedaten gesteuert werden.

Die Vorteile der system- und verwendungszugehörigen Merkmale ergeben sich ebenso für verfahrenstechnischen Merkmale, worauf hiermit verwiesen wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein beispielhaftes System zur Fußpunktverstellung
- Fig. 2: ein batterieelektrisches Fahrzeug mit einem System zur Fußpunktverstellung
- Fig. 3: eine beispielhafte Abbildung des Verfahrens zum Anheben
- Fig. 4: eine beispielhafte Abbildung des Verfahrens zum Absenken.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar.

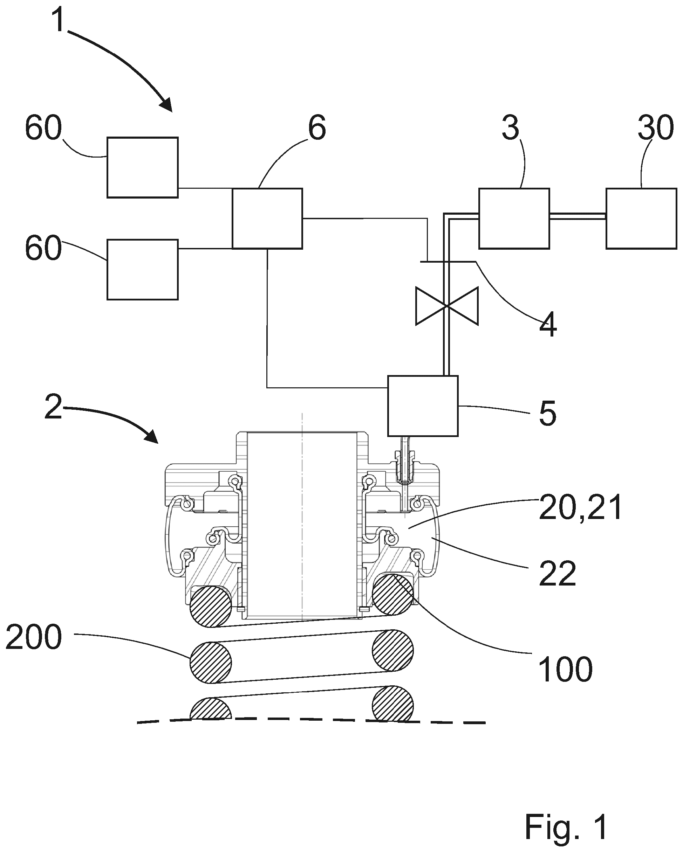

In Figur 1 ist ein beispielhaftes System 1 zum Verstellen eines Fußpunkts 100 eines Federelements 200 und das Federelement 200 gezeigt. Das System 1 ist am Fußpunkt 100 des Federelements 200 angeordnet und weist eine Fußpunktverstellvorrichtung 2 und ein Flüssigkeitssystem 3 auf. Die Fußpunktverstellvorrichtung 2 umfasst eine Kammer 20, die ein Volumen 21 und eine Flüssigkeit aufweist und zumindest teilweise von einem Balg 22 begrenzt wird. An einer dem Fußpunkt 100 gegenüberliegenden Seite der Kammer 20 ist die Kammer mit einem Ventil 4 verbunden. Zwischen dem Ventil 4 und der Kammer 20 ist eine Ein-/Ausbringvorrichtung 5 an der Fußpunktverstellvorrichtung 2 angeordnet. Das Flüssigkeitssystem 3 weist einen Flüssigkeitsspeicher 30 auf und ist auch mit dem Ventil 4 verbunden, sodass das Flüssigkeitssystem 3 mit der Kammer 20 fluidkommunizierend verbunden ist, wenn das Ventil 4 geöffnet ist und nicht fluidkommunizierend verbunden ist, wenn das Ventil 4 geschlossen ist. Eine Steuereinheit 6 ist mit zwei Sensoren 60 verbunden und ist weiter mit dem Ventil 4 und der Ein-/Ausbringvorrichtung 5 verbunden.

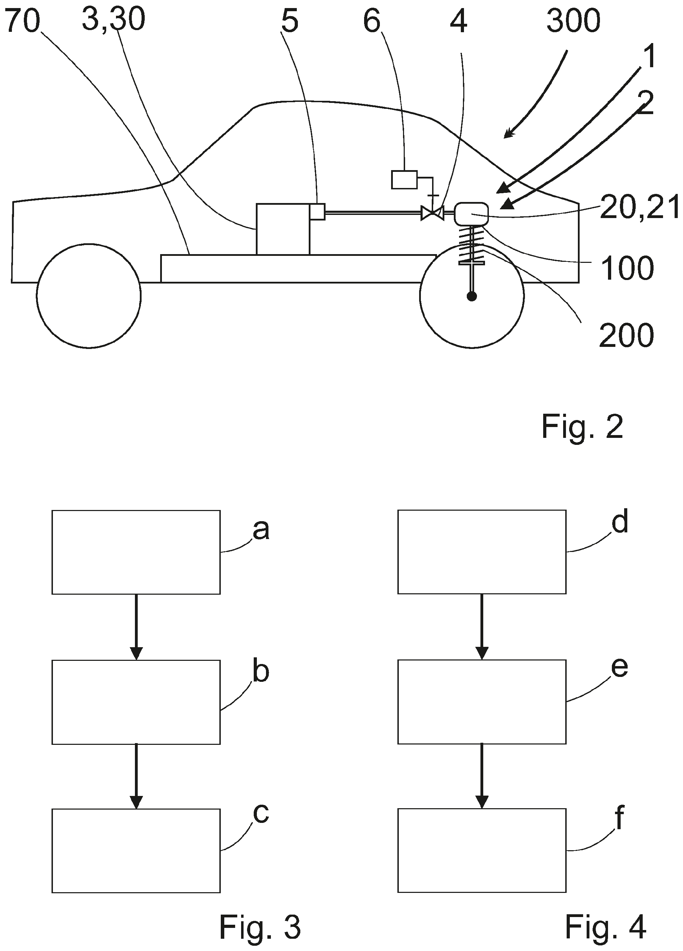

Figur 2 zeigt skizzenhaft, wie ein solches System 1 in einem batterieelektrischen Fahrzeug 300 angeordnet ist. Zur Vermeidung von Wiederholungen sollen nachstehend lediglich die Unterschiede zu Figur 1 beschrieben werden. Bereits beschriebene aber nicht erneut wiederholte Merkmale sollen gleichsam als offenbart und beschrieben gelten. Im Unterschied zu Figur 1 ist die Ein-/Ausbringvorrichtung 5 am Flüssigkeitssystem 3 angeordnet und der Flüssigkeitsspeicher 30 im Flüssigkeitssystem 3 integriert. Das Flüssigkeitssystem 3 ist ein Batteriekühlsystem und einer Fahrzeugbatterie 70 zugeordnet. Weiter sind keine Sensoren 60 an der Steuereinheit 6 gezeigt, da Sensoren und Eingaben des Fahrzeugs 300 genutzt werden können.

Figur 3 zeigt schematisch die Verfahrensschritte zum Erhöhen des Fahrzeugniveaus mit den Schritten a - c. Figur 4 zeigt ebenso schematisch die Verfahrensschritte zum Absenken des Fahrzeugniveaus mit den Schritten d - f. Es gilt:
a. Öffnen eines Ventils zwischen einer Kammer der Fußpunktverstellvorrichtung und dem Flüssigkeitssystem;
b. Einströmen der Flüssigkeit in die Kammer;
c. Schließen des Ventils zwischen der Kammer der Fußpunktverstellvorrichtung und dem Flüssigkeitssystem;
g. Öffnen eines Ventils zwischen der Kammer der Fußpunktverstellvorrichtung und dem Flüssigkeitssystem;
h. Ausströmen der Flüssigkeit in die Kammer;
i. Schließen des Ventils zwischen der Kammer der Fußpunktverstellvorrichtung und dem Flüssigkeitssystem;

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 1 -: System
- 2 -: Fußpunktverstellvorrichtung
- 3 -: Flüssigkeitssystem
- 4 -: Ventil
- 5 -: Ein-/Ausbringvorrichtung
- 6 -: Steuereinheit

- 20 -: Kammer
- 21 -: Volumen der Kammer
- 22 -: Balg

- 30 -: Flüssigkeitsspeicher

- 60 -: Sensor

- 70 -: Fahrzeugbatterie

- 100 -: Fußpunkt

- 200 -: Federelement

- 300 -: Fahrzeug

## Patentansprüche

1. System (1) zum Verstellen eines Fußpunktes (100) eines Federelements (200) für ein Fahrzeug (300), mit mindestens einer Fußpunktverstellvorrichtung (2) und mit einem Flüssigkeitssystem (3),
- die Fußpunktverstellvorrichtung (2) umfassend zumindest eine Kammer (20) zum Ändern des Fußpunktes (100) mittels einer Änderung eines Volumens (21) der Kammer (20), wobei die Kammer (20) eine Flüssigkeit aufweist,
- das Flüssigkeitssystem (3) umfassend einen Flüssigkeitsspeicher (30) für die Flüssigkeit,
- wobei zwischen dem Flüssigkeitssystem (3) und der Kammer (20) ein Ventil (4) angeordnet ist, welches in einem geöffneten Zustand das Flüssigkeitssystem (3) und die Kammer (20) fluidkommunizierend miteinander verbindet und in einer geschlossenen Stellung das Flüssigkeitssystem (3) und die Kammer (20) fluidisch trennt.

2. System (1) nach Anspruch 1, wobei das Flüssigkeitssystem (3) ein Kühlsystem ist.

3. System (1) nach Anspruch 2, wobei das Kühlsystem ein Batteriekühlsystem ist.

4. System (1) nach einem der Ansprüche 1 bis 3, wobei das System, zum Ändern des Volumens (21) der Kammer (20), eine Ein-/Ausbringvorrichtung (5) aufweist.

5. System (1) nach Anspruch 4, wobei die Ein-/Ausbringvorrichtung (5) die Flüssigkeit aus dem Flüssigkeitssystem (3) in die Kammer (20) ein-/ausbringt.

6. System (1) nach einem der vorgehenden Ansprüche, wobei die Ein-/Ausbringvorrichtung (5) an der Fußpunktverstellvorrichtung (2) angeordnet ist.

7. System (1) nach einem der Ansprüche 1 bis 5, wobei die Ein-/Ausbringvorrichtung (5) am Flüssigkeitssystem (3) angeordnet ist.

8. System (1) nach einem der vorgehenden Ansprüche, wobei die Kammer (20) zumindest bereichsweise von mindestens einem Balg (22) begrenzt wird.

9. System (1) nach einem der vorgehenden Ansprüche, wobei das System (1) eine Steuereinheit (6) aufweist, wobei die Steuereinheit (6) einen Zustandswechsel des Ventils (4) zwischen dem geöffneten Zustand und dem geschlossenen Zustand bewirken kann und/oder wobei die Steuereinheit (6) die Ein-/Ausbringvorrichtung (5) steuert.

10. Verwendung einer Flüssigkeit eines Flüssigkeitssystems (3) eines batterieelektrischen Elektrofahrzeugs (300) als Flüssigkeit zum Verstellen eines Fußpunktes (100) eines Federelements (200) des Fahrzeugs (300) mittels einer Fußpunktverstellvorrichtung (2) umfassend zumindest eine Kammer (20) zum Ändern des Fußpunktes (100) mittels einer Änderung eines Volumens der Kammer (20), wobei die Kammer (20) zur Aufnahme der Flüssigkeit ausgebildet ist, wobei die Flüssigkeit aus dem Flüssigkeitssystem (3) des batterieelektrischen Elektrofahrzeugs (300) in die Kammer (20) eingeleitet und aus der Kammer (20) in das Flüssigkeitssystem (3) zurückgeleitet wird.

11. Verfahren zur Niveauregulierung eines batterieelektrischen Elektrofahrzeugs (300) mit einem Flüssigkeitssystem (3) und einer Fußpunktverstellvorrichtung (2),
- mit den folgenden Schritten zum Erhöhen des Fahrzeugniveaus:
a. Öffnen eines Ventils (4) zwischen einer Kammer (20) der Fußpunktverstellvorrichtung (2) und dem Flüssigkeitssystem (3);
b. Einströmen der Flüssigkeit in die Kammer (20);
c. Schließen des Ventils (4) zwischen der Kammer (20) der Fußpunktverstellvorrichtung (2) und dem Flüssigkeitssystem (3);
- mit den folgenden Schritten zum Absenken des Fahrzeugniveaus:
d. Öffnen eines Ventils (4) zwischen einer Kammer (20) der Fußpunktverstellvorrichtung (2) und dem Flüssigkeitssystem (3);
e. Ausströmen der Flüssigkeit in die Kammer (20);
f. Schließen des Ventils (4) zwischen der Kammer (20) der Fußpunktverstellvorrichtung (2) und dem Flüssigkeitssystem (3);
wobei die Schritte zum Absenken und Erhöhen des Fahrzeugniveaus durch eine Steuereinheit (6) in Abhängigkeit von Sensordaten und/oder Eingabedaten gesteuert werden.
